**Europäisches Patentamt**

(19) **European Patent Office**

**Office européen des brevets**

(11) Veröffentlichungsnummer: **0 185 716**

**B1**

(12) # EUROPÄISCHE PATENTSCHRIFT

(45) Veröffentlichungstag der Patentschrift:
13.09.89

(51) Int. Cl.⁴: **G 03 B 27/73**

(21) Anmeldenummer: **85902984.5**

(22) Anmeldetag: **07.06.85**

(86) Internationale Anmeldenummer:
**PCT/EP 85/00274**

(87) Internationale Veröffentlichungsnummer:
**WO 86/00149 (03.01.86 Gazette 86/01)**

(54) MESSVORRICHTUNG ZUR FILTERBESTIMMUNG IN FOTOGRAFISCHEN VERGRÖSSERUNGS-ODER KOPIERGERÄTEN.

(30) Priorität. **14.06.84 IT 483784**

(43) Veröffentlichungstag der Anmeldung:
**02.07.86 Patentblatt 86/27**

(45) Bekanntmachung des Hinweises auf die Patenterteilung:
**13.09.89 Patentblatt 89/37**

(84) Benannte Vertragsstaaten:
**AT CH DE FR GB IT LI**

(56) Entgegenhaltungen:
**DE-A-2 042 160**
**DE-A-3 321 136**
**US-A-3 090 289**

(73) Patentinhaber: **Durst Phototechnik GmbH,**
**Gerbergasse 58, I-39100 Bozen (IT)**

(72) Erfinder: **REITERER, Walther, I-39010 Vilpian (IT)**

## Beschreibung

### Technisches Gebiet

Die Erfindung bezieht sich allgemein auf das Gebiet der Farbbelichtung fotografischer Schichtträger bei der Herstellung von Kopien von einem Filmoriginal. Insbesondere betrifft die Erfindung eine Meßvorrichtung zur Bestimmung der Farbzusammensetzung des Kopierlichtes bei Farbbelichtungen in fotografischen Vergrößerungs- oder Kopiergeräten.

Bei der Herstellung von Farbvergrößerungen oder Farbkopien von einer Filmbildvorlage ist es zur Erreichung einer korrekten Farbwiedergabe normalerweise erforderlich, das Kopierlicht der zu kopierenden Vorlage farblich anzupassen. Eine Änderung in der Farbzusammensetzung des ursprünglich im wesentlichen einen Lichtes des Vergrößerungs- oder Kopiergerätes wird beispielsweise durch Einführen von subtraktiven Farbfiltern in den Strahlengang hervorgerufen, wobei je nach Einfuhrtiefe eine größere oder geringere Beeinflussung des Kopierlichtes erreicht wird. Um die Art und das Ausmaß der erforderlichen Filterung zu bestimmen, werden häufig Lichtmeßgeräte zu Hilfe genommen, mit denen jede zu kopierende Filmbildvorlage vor dem Kopieren hinsichtlich ihrer Dichte und Farbverteilung ausgemessen wird.

### Stand der Technik

Ein Gerät zur Filterbestimmung ist beispielsweise aus der US-PS-3 819 275 bekannt. Das Gerät hat drei in den Farben Rot, Grün und Blau sensibilisierte Fotoelemente, die licht-stärkeabhängige Meßsignale für jede der Farbkomponenten Rot, Grün und Blau des Kopierlichtes erzeugen. Aus den Meßsignalen wird in einer Recheneinheit das Verhältnis der Anteile von zwei Grundfarben zum Anteil der dritten Grundfarbe ermittelt. Schließlich werden die ermittelten Verhältniswerte mit vorgegebenen Bezugswerten verglichen und eventuelle Abweichungen auf einer Anzeigevorrichtung angezeigt.

Im praktischen Einsatz eines derartigen Lichtmeßgerätes zur Bestimmung der erforderlichen Filterung wird zunächst eine Kalibrierung des Gerätes in Bezug auf eine ausgewählte Referenzvorlage vorgenommen, für welche bereits in einer vorangegangenen Versuchsreihe Belichtungszeit und Filterung für eine optimale Wiedergabe bestimmt worden sind. Hierzu wird das Vergrößerungsgerät in die für die Referenzvorlage vorherbestimmte Grundeinstellung gebracht und das bei dieser Einstellung von der Referenzvorlage austretende Licht in den drei Grundfarben gemessen; die Meßwerte werden als Bezugswerte für die laufend zu kopierenden Filmbildvorlagen im Meßgerät gespeichert. Jede der laufend zu kopierenden Vorlagen wird vor der eigentlichen Belichtung in derselben Weise ausgemessen und die jeweils eingestellte Filterung wird solange nachgeführt, bis die angezeigten Meßwerte mit den gespeicherten, auf die Referenzvorlage bezogenen Werten übereinstimmen.

Die beschriebene Vorgangsweise läuft darauf hinaus, das in der Referenzvorlage vorhandene Farbgleichgewicht durch entsprechende Farbfilterung des Kopierlichtes auch bei allen weiteren zu kopierenden Vorlagen herzustellen. Dieses Verfahren beruht auf dem sogenannten Prinzip der "Integration auf Grau", laut welchem die in einer Bildaufnahme enthaltenen Farben über die gesamte Bildfläche zu einem neutralen Grau integrieren, weil die aufgenommene Bildszene typischerweise gleiche Anteile der drei Grundfarben enthält. Aufgrund dieses Prinzips bleibt in den Farbkopien ein konstantes Farbgleichgewicht erhalten, wenn dafür gesorgt wird, dass das aus den einzelnen Filmbildvorlagen austretende Kopierlicht ein konstantes Verhältnis der Grundfarbenanteile aufweist.

Die beschriebene Vorgangsweise führt jedoch zu unbefriedigenden Ergebnissen, wenn eine Vorlage Farbdominanten aufweist. In einem solchen Fall ergibt sich infolge des vollen Ausgleichs der Abweichung vom Neutralgrau durch die Filterung ein zur Farbdominante komplementärfarbiger Stich in der Bildkopie und damit im Endeffekt eine gegenüber dem Original verfälschte Farbwiedergabe. Die praktische Erfahrung hat gezeigt, dass die Anzahl zufriedenstellender Kopien von korrekt belichteten aber Farbdominanten aufweisenden Filmbildvorlagen durchschnittlich größer ist, wenn keine volle Kompensation zu Neutralgrau herbeigeführt, sondern ein gewisser Grad von Unterkorrektur beibehalten wird.

Das im angegebenen US-Patent beschriebene Lichtmeßgerät ist nicht geeignet für eine Filterbestimmung unter Beibehaltung eines definierten Grades von Unterkorrektur, weil mit ihm die Filterung in der Weise festgelegt wird, daß das aus der Filmbildvorlage austretende Kopierlicht stets das gleiche Verhältnis der Farbanteile aufweist. Dies bedeutet, daß eine Differenz in der Farbdichte zwischen der jeweiligen Vorlage und der Referenzvorlage durch eine entsprechende Änderung der Filterung vollkommen kompensiert wird und kein Anhaltspunkt für die Ausführung einer definierten Unterkorrektur gegeben ist.

Aus der DE-A-2 042 160 ist eine Einrichtung zum Kopieren farbiger Filmbildvorlagen mit einstellbaren Farbfiltern bekannt, wo die Intensität des Kopierlichtes vor und hinter der Kopiervorlage farbselektiv erfaßt wird und aus den Farbmeßsignalen vor und hinter der Kopiervorlage Differenzsignale gebildet werden, welche die Farbdichte der Kopiervorlage darstellen. Ausgehend von den Differenzsignalen wird durch Mittelwertbildung der Farbanteile und Vergleich des Mittelwertes mit jedem einzelnen Farbanteil ein von der Gesamtdichte unabhängiges, vom Farbgleichgewicht der Kopiervorlage beeinflußtes

Signal gewonnen, das ein Maß für eine vorhandene Farbdominante ist und einer eigenen Unterkorrekturstufe als Bezugswert für eine einstellbare Farbunterkorrektur zugeführt wird. Das auf diese Weise gewonnene Unterkorrektursignal ist Teil eines aus den Meßwerten der Vorlagendichte unter Einbeziehung von wahlweise einstellbaren Korrekturwerten hergeleiteten Sollsignals, gemäß welchem die Farbfilter nachgeführt werden. Mit der Einrichtung ist eine Unterkorrektur definierten Ausmaßes möglich, die Signalverarbeitung insgesamt erfordert jedoch einen relativ großen Aufwand an Schaltungsmitteln, bedingt unter anderem durch die Stufen zur Gewinnung getrennter Korrektursignale für die Farb- bzw. Helligkeitskorrektur einschließlich eines getrennten Farbunterkorrektursignals. Das Bilden eines Sollsignals für die Filternachführung aus der Vorlagendichte macht außerdem eine exakte Dichtemessung innerhalb des gesamten vorkommenden Dichteumfangs notwendig, wodurch an die Meßvorrichtung entsprechende Anforderung hinsichtlich Linearität und Meßgenauigkeit gestellt werden.

### Offenbarung der Erfindung

Die Aufgabe der Erfindung besteht darin, eine Meßvorrichtung der eingangs genannten Art zu schaffen, mit welcher die Filterbestimmung unter Beibehaltung eines definierten Grades Unterkorrektur auf einfache Weise und mit gegenüber bekannten Vorrichtungen geringerem Schaltungsaufwand erfolgen kann.

Diese Aufgabe wird erfindungsgemäß durch die Merkmale des kennzeichnenden Teils des Patentanspruchs 1 gelöst, gemäß welchem aus den Lichtmeßsignalen vor und hinter der Kopiervorlage ein Produktsignal für jede Grundfarbe und Verhältniswerte der Produktsignale in zwei Grundfarben bezogen auf das Produktsignal der dritten Grundfarbe gebildet werden und die Filtereinstellung nach Maßgabe der Abweichung dieser Verhältniswerte von vorgegebenen Referenzwerten erfolgt.

Dank der multiplikativen Verknüpfung von Meßsignalen des Kopierlichtes vor und nach dem Durchfluß durch die zu kopierende Bildvorlage wird erreicht, daß eine Änderung der Filtereinstellung sich auf die Meßwertanzeige überproportional zu dem von der gleichen Filteränderung auf dem Kopiermaterial in der Kopierebene hervorgerufenen Effekt auswirkt. Mit der erfindungsgemäßen Meßeinrichtung wird also bei gleicher Vorgangsweise wie mit herkömmlichen Filterbestimmungsgeräten eine nur teilweise Farbkorrektur ausgeführt, das heißt es erfolgt eine Filterbestimmung mit Unterkorrektur. Insbesondere ergibt sich aus der Produktbildung der vor und hinter der Kopiervorlage entstehenden Farbsignale eine 50-%-ige Unterkorrektur, die erfahrungsgemäß befriedigende Ergebnisse für eine breite Auswahl von unterschiedlichen Filmbildvorlagen erbringt.

Die Meßzellen, welche die einzelnen Meßsignale erzeugen, sind vorteilhafterweise in zwei Gruppen aufgeteilt, wobei jede Gruppe rot-, grün- und blausensibilisierte Fotoelemente enthält und die eine in einer beweglichen Meßsonde und die andere im Inneren eines oberhalb der Filmbildvorlage angeordneten Lichtmischschachtes untergebracht ist.

Weitere vorteilhafte Ausgestaltungen der erfindungsgemäßen Vorrichtung ergeben sich aus den Unteransprüchen in Verbindung mit der nachfolgenden Beschreibung eines in der einzigen Zeichnung schematisch dargestellten bevorzugten Ausführungsbeispieles.

### Kurze Beschreibung der Zeichnung

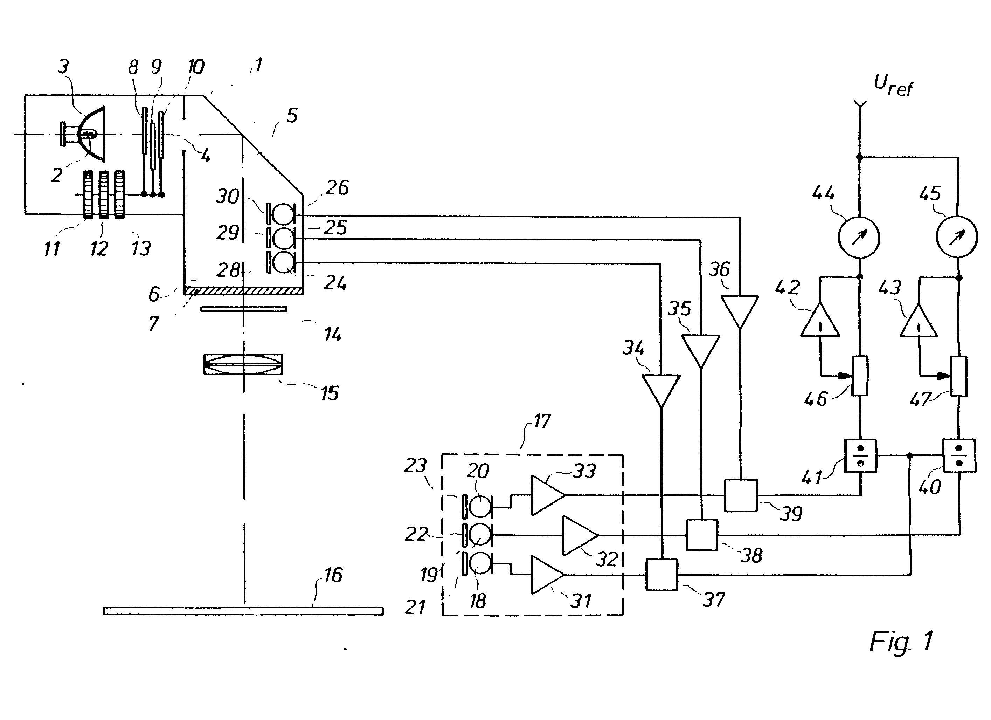

Figur 1 - zeigt ein Blockschaltbild zur Verdeutlichung des Funktionsprinzips der erfindungsgemäßen Meßeinrichtung in Verbindung mit einem schematisch dargestellten Vergrößerungsgerät.

### Bevorzugte Ausführungsform der Erfindung

In der Figur 1 ist mit der Bezugsziffer 1 allgemein der Farbkopf eines fotografischen Vergrößerungsgerätes bezeichnet, welches im übrigen nur schematisch und beschränkt auf jene Teile, die zum Verständnis des Meßprinzips notwendig sind, dargestellt ist. Eine Lichtquelle 2 mit einem Reflektor 3 wirft Licht auf die Lichteintrittsöffnung 4 eines Lichtmischschachtes 5, dessen Lichtaustrittsöffnung 6 von einer Streuscheibe 7 abgedeckt ist. Drei Farbfilter 8, 9 und 10 in den Komplementärfarben Cyan, Magenta und Gelb sind einzeln über Antriebsorgane 11, 12 und 13 teilweise in den Strahlengang einführbar und überdecken einen wählbaren Teil des Strahlenquerschnittes, sodaß dieser Teil des Lichtes angefärbt wird. Der von den Filtern unbeeinflußte und der angefärbte Teil des Strahlenbündels werden im Lichtmischschacht 5 gemischt, sodaß am Ausgang des Schachtes farblich homogenes Licht aufscheint, dessen Farbzusammensetzung von der Stellung der Filter innerhalb des Strahlengangs abhängt. Aus dem Lichtmischschacht 5 mit der Streuscheibe 7 tritt diffuses und farblich homogenes Licht und durchleuchtet eine zu kopierende Filmbildvorlage 14, die von einem Objektiv 15 auf der Kopierebene 16 scharf abgebildet wird.

Die eigentliche Meßvorrichtung umfaßt eine Meßsonde 17 mit einer ersten Gruppe von Meßzellen 18, 19 und 20, die mittels vorgesetzter Farbfilter 21, 22 und 23 in den Farben Rot, Grün und Blau sensibilisiert sind. Eine zweite Gruppe von Meßzellen, die gleicherweise mittels Filter 28, 29 und 30 in den Farben Rot, Grün und Blau sensibilisiert werden, ist im Innern des Lichtmischschachtes 5 fest angeordnet und empfängt das farblich homogene Licht, wie es auf die Filmbildvorlage 14 gelangt. An die Meßzellen beider Gruppen schließen sich Signalverstärker 31 bis 36 an, deren Ausgangssignale ein Maß für die Lichtintensität der von der jeweiligen Meßzelle in der jeweiligen Meßebene erfaßten Farbkomponente liefern. Zu einer selben Farbkomponente gehörende Meßsignale aus beiden Gruppen von Meßzellen werden nach der Verstärkung in Operationseinheiten 37, 38 und 39 miteinander multipliziert, sodaß für jede Farbe ein Ergebnissignal entsteht, das eine Funktion sowohl des von der Meßsonde 17 aufgenommenen als auch des im Innern des Lichtmischschachtes oberhalb der Filmbildvorlage vorhandenen Lichtes ist. In einer weiteren Verarbeitungsstufe werden aus den Signalen an den Ausgängen der Operationseinheiten 37, 38 und 39 Verhältniswerte der Farbkomponenten zueinander gebildet. Insbesondere werden die aus den Farbkomponenten Grün und Blau hervorgehenden Signale Divisions-Schaltkreisen 40 und 41 zugeführt, an denen außerdem das der roten Farbkomponente entsprechende Signal anliegt, sodaß die Ausgangssignale der Divisionsschaltkreise das Verhältnis der grünen bzw. blauen Farbkomponente zur roten Farbkomponente ausdrücken. Beide Verhältnissignale werden über regelbare Verstärker 42, 43 einer Anzeigeeinrichtung zugeführt, die vorzugsweise Anzeigeinstrumente 44, 45 mit Nullpunkt in der Mitte umfaßt, an welchen die Differenz zwischen dem jeweils angelegten Meßsignal und einem fixen Wert $U_{ref}$ angezeigt wird. Die Verstärkungsregelung der Verstärker 42 und 43 wird in bekannter Weise mittels einstellbarer Potentiometer 46, 47 im Rückkopplungszweig der Verstärker erreicht. Mit den Potentiometern 46, 47 kann in einem Kalibriervorgang die Anzeige der Instrumente 44, 45 bezüglich der Referenzvorlage auf einen festen Bezugswert, beispielsweise auf Null eingestellt werden.

Die Anwendung der erfindungsgemäßen Meßvorrichtung ist im wesentlichen dieselbe wie mit herkömmlichen Filterbestimmungsgeräten. In einem vorausgehenden Kalibriervorgang wird die Anzeige der Instrumente 44, 45 bezüglich einer Referenzvorlage und der auf dieselbe abgestimmten Filterung mit den Potentiometern 46, 47 auf den Bezugswert, beispielsweise Null, eingestellt. Zur Filterbestimmung für eine zu kopierende Filmbildvorlage wird die Meßsonde der bereits kalibrierten Meßvorrichtung dem aus der Filmbildvorlage austretenden Kopierlicht ausgesetzt und eine eventuelle, von den Anzeigeinstrumenten angezeigte Abweichung vom Farbgleichgewicht der Referenzvorlage durch entsprechende Nachführung der Filter ausgeglichen. In der Praxis führt also die Bedienungsperson die Filter am Farbkopf des Vergrößerungsgerätes mit Hilfe der Filterantriebe so lange nach, bis die Anzeigeinstrumente neuerdings auf Null stehen.

Es ist nun unschwer verständlich, wie mit der beschriebenen Meßvorrichtung und bei der beschriebenen Vorgangsweise eine Unterkorrektur entsteht: eine Änderung der Lichtintensität, die durch Änderung der Filterung entsteht, wird von beiden Gruppen von Meßzellen vor und hinter der Filmbildvorlage registriert, während ein Unterschied in der Dichte einer Filmbildvorlage gegenüber einer anderen nur von den Meßzellen in der Meßsonde wahrgenommen wird. Im Falle, dass in den Operationseinheiten 37, 38 und 39 eine Multiplikation der aus den beiden Gruppen von Meßzellen kommenden Signale erfolgt, hängt demnach die Meßanzeige von Intensitätsänderungen, die durch Filterung verursacht werden, quadratisch und von solchen, die auf Unterschiede in der Vorlagendichte zurückgehen, linear ab. Unter Berücksichtigung der logarithmischen Beziehung zwischen Filter- bzw. Vorlagendichte einerseits und Intensität des Durchlichtes andererseits ergibt sich damit, dass eine Abweichung der Meßanzeige vom Nullpunkt infolge einer bestimmten Dichteänderung $\Delta D$ einer Filmbildvorlage gegenüber der Referenzvorlage bereits durch eine Filteränderung in entgegengesetztem Sinn im Werte von $\Delta D/2$ kompensiert wird. Mit anderen Worten, einem Dichteunterschied von $\Delta D$ in der Vorlage steht bei gleichbleibender Meßwertanzeige eine Änderung der Filterdichte im Wert von $-\Delta D/2$ gegenüber; dies bedeutet eine 50-%-ige Unterkorrektur. Für den Fachmann ist es ohne weiters verständlich, dass bei Kombination der Meßsignale aus den beiden Gruppen von Meßzellen zu einer anderen Funktion als zum Produkt verschiedene Grade von Unterkorrektur erzielt werden könnten. Anstelle der Produktbildung können beispielsweise die logarithmischen Werte der einzelnen Meßsignale oder modifizierte Werte derselben summiert werden.

Die erfindungsgemäße Meßvorrichtung und deren Anwendung ist im Vorhergehenden in Bezug auf eine Beleuchtungseinrichtung beschrieben, in welcher die Anfärbung des Kopierlichtes durch entsprechende Farbfilterung des Lichtes einer im wesentlichen weißen Lichtquelle erfolgt. Sie ist aber auch auf eine Beleuchtungseinrichtung anwendbar, in der getrennte Farblichtquellen für jede der drei Grundfarben vorgesehen sind, und die Farbzusammensetzung des Gesamtlichtes vom Verhältnis der Lichtstärken der einzelnen Lichtquellen zueinander bestimmt ist. In diesem Falle wird die Farbzusammensetzung des Kopierlichtes anstatt durch Filterung eines einzigen weißen Lichtbündels durch entsprechende Regelung der einzelnen Lichtquellen beeinflußt.

**Patentansprüche**

1. Meßvorrichtung zur Filterbestimmung in einem fotografischen Vergrößerungs- oder Kopiergerät, mit Lichtmeßmitteln zum farbselektiven Erfassen sowohl des in die Kopiervorlage eintretenden als auch des aus derselben austretenden Kopierlichtes in den Grundfarben Rot, Grün und Blau, einer Signalverarbeitungsvorrichtung zum Bilden eines von den Farbintensitäten vor und hinter der Kopiervorlage abhängigen Farbsignals in jeder Grundfarbe und einer Vergleichsvorrichtung zum Vergleichen der Farbsignale mit vorgegebenen Referenzwerten, dadurch gekennzeichnet, daß die Signalverarbeitungsvorrichtung Mittel zum Bilden eines dem Produkt aus den Lichtmeßsignalen vor und hinter der Kopiervorlage entsprechenden Produktsignals für jede Grundfarbe und zum Bilden der Verhältniswerte der Produktsignale in zwei Grundfarben bezogen auf das Produktsignal in der dritten Grundfarbe aufweist und daß die Filtereinstellung nach Maßgabe der Abweichung dieser Verhältniswerte von den vorgegebenen Referenzwerten erfolgt.

2. Meßvorrichtung nach Anspruch 1 dadurch gekennzeichnet, daß das Produktsignal für jede Grundfarbe durch Addition der logarithmischen Lichtmeßwerte vor und hinter der Kopiervorlage gebildet wird.

3. Meßvorrichtung nach einem der vorhergehenden Ansprüche, gekennzeichnet durch zwei getrennte Gruppen von Meßzellen (18, 19, 20; 24, 25, 26), von denen jede rot-, grün- und blausensibilisierte Elemente umfaßt und die eine Gruppe aus der Filmbildvorlage austretendes und die andere Gruppe in die Filmbildvorlage eintretendes, durch die Vorlage nicht beeinflußtes Meßlicht empfängt.

4. Meßvorrichtung nach Anspruch 3, dadurch gekennzeichnet, daß die für den Empfang von aus der Filmbildvorlage austretendem Meßlicht vorgesehene Gruppe von Meßzellen in einer beweglichen Meßsonde untergebracht ist.

5. Meßvorrichtung nach Anspruch 3, dadurch gekennzeichnet, daß die für den Empfang von in die Filmbildvorlage eintretendem Meßlicht vorgesehene Gruppe von Meßzellen im Inneren eines Lichtmischschachtes (5) angeordnet ist, der das Kopierlicht auf die Filmbildvorlage leitet.

## Claims

1. Measuring device for filter determination in a photographic enlarger or copying machine, having light measuring means for the colour-selective detection both of the copying light entering the original and of the copying light emerging therefrom in the primary colours red, green and blue, a signal processing device for forming a colour signal dependent upon the colour intensities before and after the original in each primary colour and a comparison device for comparing the colour signals with predetermined reference values, characterised in that the signal processing device has means for forming a product signal corresponding to the product of the light measuring signals before and after the original for each primary colour and for forming the ratios of the product signals in two primary colours relative to the product signal in the third primary colour, and the filter adjustment is made according to the deviation of these ratios from the predetermined reference values.

2. Measuring device according to claim 1, characterised in that the product signal for each primary colour is formed by the addition of the logarithmic light measuring values before and after the original.

3. Measuring device according to any one of the preceding claims, characterized by two separate groups of measuring cells (18, 19, 20; 24, 25, 26) each of which includes red-, green- and blue-sensitised elements and of which one group receives measuring light emerging from the film frame original and the other group receives measuring light entering the film frame original, which is not affected by the original.

4. Measuring device according to claim 3, characterised in that the group of measuring cells provided for receiving measuring light emerging from the film frame original is housed in a movable measuring probe.

5. Measuring device according to claim 3, characterised in that the group of measuring cells provided for receiving measuring light entering the film frame original is arranged in the interior of a light mixing shaft (5) which guides the copying light onto the film frame original.

## Revendications

1. Dispositif de mesure pour la définition du filtrage dans un agrandisseur ou une tireuse photographique, comprenant des moyens de mesure de la lumière servant à la mesure chromatique sélective de la lumière de tirage entrant dans l'original à tirer ainsi que de la lumière sortant de ce même original à tirer, dans les couleurs fondamentales, le rouge, le vert et le bleu, un dispositif de traitement des signaux destiné à former un signal de couleur qui est fonction des intensités des couleurs en amont et en aval de l'original à tirer dans chaque couleur fondamentale, et un dispositif comparateur destiné à comparer les signaux de couleur à des valeurs de référence prédéterminées, caractérisé en ce que le dispositif de traitement des signaux comprend des moyens destinés à former, pour chaque couleur fondamentale, un signal produit qui correspond au produit des signaux de mesure de la lumière formés en amont et en aval de l'original à tirer, et à former les rapports entre les signaux produits dans deux couleurs fondamentales et le signal produit dans la troisième couleur fondamentale, et en ce que le réglage des filtres s'effectue en fonction de l'écart entre ces rapports et les valeurs de référence prédéterminées.

2. Dispositif de mesure selon la revendication 1, caractérisé en ce que le signal produit est formé pour chaque couleur fondamentale par addition des logarithmes des mesures de la lumière en amont et en aval de l'original à tirer.

3. Dispositif de mesure selon une des revendications précédentes, caractérisé par deux groupes séparés de cellules de mesure (18, 19, 20, 24, 25, 26) dont chacun comprend des éléments sensibilisés au rouge, au vert et au bleu, le premier groupe recevant une lumière de mesure qui émerge de l'original sur film et l'autre groupe recevant la lumière qui pénètre dans l'original sur film, qui n'est pas influencée par l'original.

4. Dispositif de mesure de la lumière selon la revendication 3, caractérisé en ce que le groupe de cellules de mesure prévu pour recevoir la lumière de mesure qui émerge de l'original sur le film est logé dans une sonde de mesure mobile.

5. Dispositif de mesure selon la revendication 3, caractérisé en ce que le groupe de cellules de mesure prévu pour recevoir la lumière de mesure qui pénètre dans l'original sur le film est agencé à l'intérieur d'une boîte de mélange de la lumière (5) qui projette la lumière de tirage sur l'original sur film.

EP 0 185 716 B1

Fig. 1